# EUROPÄISCHE PATENTSCHRIFT

(11) **EP 1 261 168 B1**
(45) Veröffentlichungstag und Bekanntmachung des Hinweises auf die Patenterteilung: **18.05.2011**
(21) Anmeldenummer: 01440143.4
(22) Anmeldetag: 22.05.2001
(51) Int. Cl.: H04L 12/24

(54) **Verfahren und Agenten zur Verarbeitung von Ereignismeldungen**
Method and agents for processing event messages
Méthode et agents pour le traitement de messages d'événements

(43) Veröffentlichungstag der Anmeldung: 27.11.2002
(73) Patentinhaber: Alcatel Lucent, 75008 Paris (FR)
(72) Erfinder: Takats, Martin, Dr., 12619 Berlin (DE); Pauli, Axel, 12555 Berlin (DE); Paschelke, Willi, Dr., 16562 Bergfelde (DE)
(74) Vertreter: Schmidt, Werner Karl

(56) Entgegenhaltungen:
- WO-A-99/49474
- US-A- 5 978 845
- GARIJO M ET AL: "A MULTIAGENT SYSTEM FOR COOPERATIVE NETWORK-FAULT MANAGEMENT" PROCEEDINGS OF THE INTERNATIONAL CONFERENCE ON THE PRACTICAL APPLICATION OF INTELLIGENT AGENTS AND MULTI-AGENT TECHNOLOGY, XX, XX, 22. April 1996 (1996-04-22), Seiten 279-294, XP002068055
- BIRON B ET AL: "IDEAL: A MULTI-AGENT ARCHITECTURE FOR THE MANAGEMENT OF COMPLEX NETWORKS" PROCEEDINGS OF THE INTERNATIONAL CONFERENCE ON COMMUNICATIONS (ICC). GENEVA, MAY 23 - 26, 1993, NEW YORK, IEEE, US, Bd. 3, 23. Mai 1993 (1993-05-23), Seiten 1875-1879, XP000448445 ISBN: 0-7803-0950-2

## Beschreibung

Die vorliegende Erfindung betrifft ein Verfahren zur Verarbeitung von Ereignisinformationen, die von Netzelementen eines Kommunikationsnetzes an ein dieses verwaltendes Netzwerk-Management-System gemeldet werden, durch einen Ereignis-Verarbeitungsagenten des Netzwerk-Management-Systems, einen Ereignis-Verarbeitungsagenten hierfür sowie einen Unteragenten hierfür.

Kommunikationsnetze, beispielsweise Rechner-Netzwerke oder Telekommunikations-Netzwerke, werden durch Netzwerk-Management-Systeme überwacht und gesteuert. Netzelemente eines Kommunikationsnetzes, beispielsweise Vermittlungsstellen, Router, Vorfeldeinrichtungen oder dergleichen, senden Ereignisinformationen an das sie verwaltende Netzwerk-Management-System. Bei diesem sind einer oder mehrere Verarbeitungsagenten, beispielsweise von dem jeweiligen Netzwerk-Management-System ausgeführte Verarbeitungsprozesse, vorgesehen, die die jeweiligen Ereignisinformationen verarbeiten. Bei den Ereignisinformationen kann es sich beispielsweise um eine Störung im verwalteten Netzelement oder die Überschreitung eines Grenzwertes handeln, also beispielsweise um Alarmmeldungen, oder um Statusmeldungen, beispielsweise die Änderung des Konfigurationszustandes des verwalteten Netzelementes. Der Verarbeitungsagent schreibt die Ereignisinformation beispielsweise in eine Datenbank ein, aus der sie z.B. von einer Bedienoberfläche des Netzwerk-Management-Systems ausgelesen wird. Die Ereignisdatenbank spiegelt dann beispielsweise den Ereigniszustand des verwalteten Netzelementes wider.

Bei bekannten Netzwerk-Management-Systemen ist ein Verarbeitungsagent beispielsweise für alle Alarmmeldungen zuständig, die von einem oder mehreren Netzelementen gesendet werden. Der Verabeitungs-Agent wird beim Systemstart des Netzwerk-Management-Systems anhand einer Konfigurationsdatei gestartet und ist zur Laufzeit des Netzwerk-Management-Systems sozusagen der Ansprechpartner für eines oder mehrere verwaltete Netzelemente. Der Verarbeitungsagent muss daher so ausgelegt sein, dass er alle Typen von Ereignisinformationen, die von dem durch ihn verwalteten Netzelement gesendet werden, verarbeiten kann. Ändert sich jedoch an der Konfiguration des Netzelementes etwas, beispielsweise weil eine neue Software geladen wird, so kann der Verarbeitungsagent möglicherweise auf Grund des neuen Softwarestandes neu hinzugekommene Ereignisinformationen und/oder gegenüber dem alten Softwarestand inhaltlich oder hinsichtlich der Formatierung veränderte Ereignisinformationen nicht verarbeiten.

Aus WO 99/49474 ist ein Netzwerk-Management-System bekannt mit einer Dotensommlungs-Infrastruktur, die mit Software-Agenten arbeitet.

Insbesondere startet, verwaltet und beendet ein Agent-Manager einen oder mehrere Dynamische Agenten.

Patentschrift US 5,978,845 beschreibt ein Verfahren für Informationsaustausch zwischen Netzwerk-Management Einheiten, die SNMP Protokoll benutzen.

Eine weitere problematische Situation tritt auf, wenn ein Verarbeitungsagent, der bereits für eines oder mehrere Netzelemente zuständig ist, Ereignisinformationen eines weiteren Netzelementes verarbeiten soll und dadurch überlastet wird.

Es ist daher Aufgabe der Erfindung, bei einem Netzwerk-Management-System eine optimierte Ereignisinformationsverarbeitung bereitzustellen.

Diese Aufgabe wird gelöst durch ein Verfahren gemäß der technischen Lehre des Anspruchs 1 und einen Verarbeitungsagenten gemäß der technischen Lehre des Anspruchs 7.

Der Erfindung liegt der Gedanke zugrunde, dass der Verarbeitungsagent oder ein Kommunikationsagent an zentraler Stelle die von einem oder mehreren Netzelementen gesendeten Ereignisinformationen empfängt. Die eigentliche Verarbeitung der Ereignisinformationen übemehmen jedoch ein oder mehrere Unteragenten, die für die Verarbeitung der jeweiligen Ereignisinformationen optimal geeignet sind. Beispielsweise kann ein erster Unteragent zur Verarbeitung von Ereignisinformationen eines ersten Netzelementes und ein zweiter Unteragent zur Verarbeitung von Ereignisinformationen eines zweiten Netzelementes vorgesehen sein. Ferner können der Verarbeitungsagent bzw. der Kommunikationsagent zentraler Ansprechpartner für weitere Agenten des Netzwerk-Management-Systems sein. Beispielsweise kann ein Bedienoberflächen-Agent, der zur Erzeugung einer Bedienoberfläche des Netzwerk-Management-Systems vorgesehen ist, bei dem Verarbeitungsagenten bzw. dem Kommunikationsagenten Ereignisinformationen abfragen. Für den Bedienoberflächen-Agenten bleibt es verborgen, dass Unteragenten die eigentliche Verarbeitung der Ereignisinformationen, beispielsweise das Eintragen in eine Ereignis-Datenbank, vornehmen. Dabei ist es auch möglich, dass für die Abfrage von Ereignisinformationen, z.B. durch den Bedienoberflächen-Agenten, ein vom Verarbeitungsagenten gesteuerter und überwachter Abfrage-Unteragent vorgesehen ist. Prinzipiell ist es möglich, dass ein Verarbeitungsagent mehrere Unteragenten parallel betreibt oder beispielsweise nur einen Unteragenten, den er gegebenenfalls durch einen Ersatz-Unteragenten ersetzt. Die Unteragenten, also der ursprüngliche Unteragent und der Ersatz-Unteragent, können im letzteren Fall nacheinander aktiv sein oder für eine Übergangsphase auch parallel.

Die Weiterleitung der Ereignisinformationen und/oder von Anforderungen an die Unteragenten kann durch den oder die Verarbeitungsagenten vorgenommen werden. Es kann bzw. können dafür jedoch auch ein oder mehrere Kommunikationsagenten vorgesehen sein.

Jedenfalls ist durch das Konzept der Unteragenten möglich, das Netzwerk-Management-System an die jeweiligen Systemanforderungen, beispielsweise Anzahl und/oder Betriebseigenschaften der verwalteten Netzelemente, dynamisch anzupassen.

Vorteilhafte Ausgestaltungen der Erfindung finden sich in den Unteransprüchen sowie in der Beschreibung.

Bei der Entscheidung, welcher und/oder wie viele Unteragenten zur Verarbeitung der Ereignisinformationen geeignet sind, kann der Verarbeitungsagent nach einem oder mehreren Kriterien vorgehen, von denen nachfolgend einige wenige exemplarisch genannt werden:

Zweckmäßigerweise startet der Verarbeitungsagent jeweils solche Unteragenten, die an die Qualität der jeweils zu verarbeitenden Ereignisinformation optimal angepasst sind. Beispielsweise kann ein erster Unteragent zur Verarbeitung von Ereignisinformationen eines ersten Typs und ein zweiter Unteragent zur Verarbeitung von Ereignisinformationen eines zweiten Typs vorgesehen sein.

Ferner ist es möglich, dass der Verarbeitungsagent die jeweilige Belastungsgrenze eines Unteragenten hinsichtlich zu verarbeitender Ereignisinformationen berücksichtigt. Beispielsweise kann bei Erreichen einer Belastungsgrenze eines ersten Unteragenten ein zweiter Unteragent vom Verarbeitungsagenten gestartet werden. Wird die Belastungsgrenze wieder unterschritten, kann der zweite Unteragent beendet werden. Die Belastungsgrenze kann beispielsweise dadurch überschritten werden, dass ein Unteragent nur für eine vorbestimmte Anzahl von Netzelementen, beispielsweise zwei Netzelemente, zuständig sein kann. Eine Belastungsgrenze kann jedoch auch temporär überschritten werden, beispielsweise wenn bei einem Störungsfall eine Vielzahl von Ereignisinformationen zu verarbeiten ist.

Als weiteres Kriterium kann eine individuelle Zuordnung von jeweils einem oder mehreren Netzelementen zu Unteragenten vorgesehen sein.

Ein weiterer Vorteil des erfinderischen Konzeptes zeigt sich bei einer Veränderung der Konfiguration des durch das Netzwerk-Management-System verwalteten Kommunikationsnetzes und/oder der Konfiguration von Netzelementen des Kommunikationsnetzes. Der Verarbeitungsagent kann dynamisch auf solche Veränderungen reagieren und dabei vorteilhaft neue Unteragenten starten, die beispielsweise für neu hinzugekommene Netzelemente zuständig sind, und/oder Unteragenten beenden, wenn ein Netzelement aus dem verwalteten Kommunikationsnetz entfernt wird, beispielsweise wenn dessen Betrieb beendet wird. Auch eine Anpassung an lokale Veränderungen, beispielsweise wenn ein Netzelement mit veränderten Konfigurationsdaten betrieben wird und/oder das Netzelement mit einer neuen Software betrieben wird, ist ohne Weiteres möglich: Der Verarbeitungsagent sendet an den oder die für das jeweilige Netzelement zuständigen Unteragenten beispielsweise Steuerdaten, mit denen diese an die neuen Verhältnisse bei dem verwalteten Netzelement angepasst werden. Es ist auch möglich, dass der Verarbeitungsagent einen oder mehrere neue Unteragenten startet, die anstelle oder in Ergänzung des oder der seither für das verwaltete Netzelement zuständigen Unteragenten treten.

Vorteilhaft ist vorgesehen, dass der Verarbeitungsagent die Funktionsfähigkeit seiner Unteragenten überwacht und bei einer Funktionsstörung eine Fehlerbehandlung

initialisiert. Beispielsweise kann der Verarbeitungsagent einen oder mehrere neue Unteragenten starten, die anstelle des gestörten Unteragenten treten.

Prinzipiell eignet sich das erfinderische Konzept zur Verarbeitung jeglichen Typs von Ereignisinformationen. Vorteilhaft ist allerdings vorgesehen, dass es sich bei den Ereignisinformationen um Alarmmeldungen von verwalteten Netzelementen handelt.

Bei dem Ereignis-Verarbeitungsagenten handelt es sich vorzugsweise um ein Programmmodul, das Programmcode enthält, das von einem Steuermittel eines Servers des Netzwerk-Management-Systems ausgeführt werden kann. Prinzipiell ist es aber auch möglich, dass der Verarbeitungsagent ein separater Rechner eines Netzwerk-Management-Systems ist. Auch hinsichtlich der Unteragenten sind prinzipiell Realisierungen in Hardware und in Software möglich.

Im Folgenden wird die Erfindung anhand eines Ausführungsbeispiels unter Zuhilfenahme der Zeichnung erläutert. Es zeigen:
- Figur 1: ein erfindungsgemäßes Netzwerk-Management-System NMS eines Kommunikationsnetzes NW mit erfindungsgemäßen Verarbeitungsagenten VO1, VO2 sowie erfindungsgemäßen Unteragenten S1, S4; S21, S22, S31, S32,

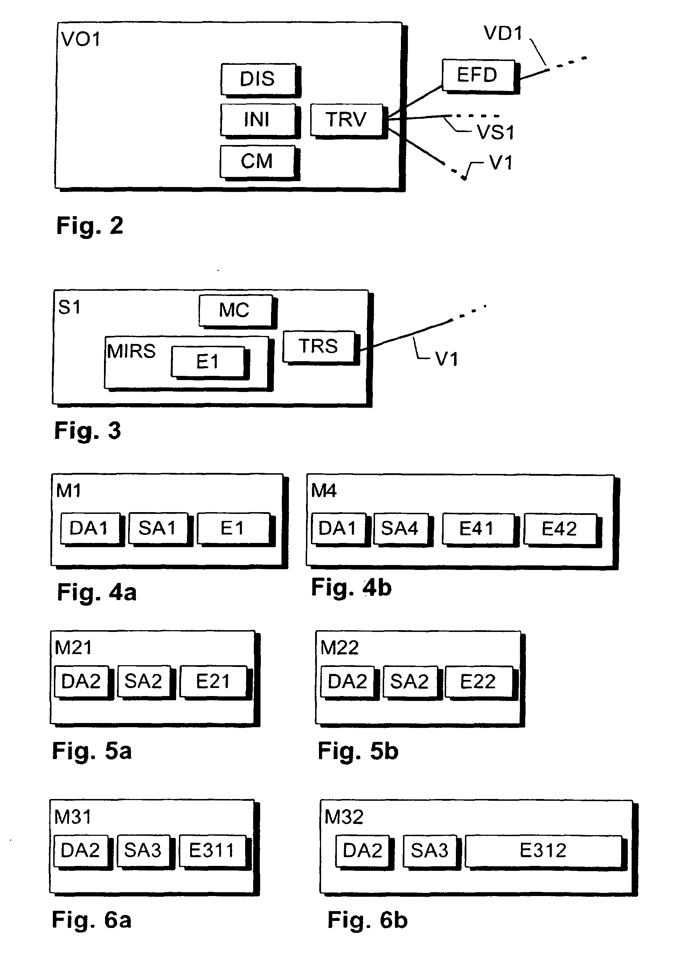

- Figur 2: eine schematische Detailansicht des Verarbeitungsagenten VO1,
- Figur 3: eine schematische Detailansicht des Unteragenten S1, die
- Figuren 4-6: von Netzelementen SW1 - SW4 des Kommunikationsnetzes NW gesendete Ereignisinformationen, und
- Figur 7: eine Abwandlung der Anordnung aus Figur 1 mit einem zusätzlichen, mit einem anstelle des Verarbeitungsagenten VO2 vorgesehen Verarbeitungsagenten V22 kooperierenden Kommunikationsagenten KS.

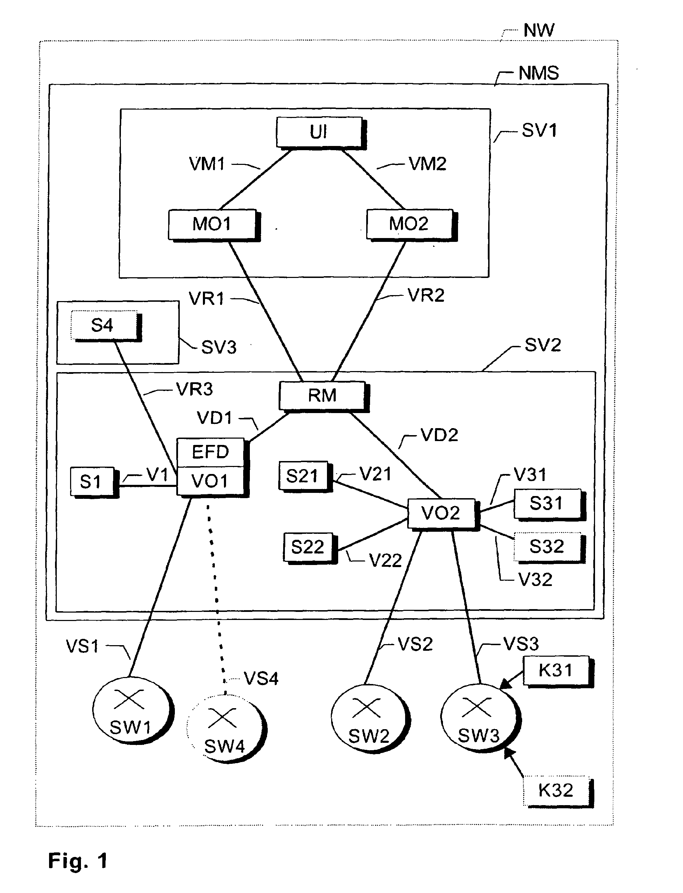

Das in Figur 1 gezeigte Kommunikationsnetz NW wird von einem Netzwerk-Management-System NMS mit Servern SV1 - SV3 verwaltet und weist Netzelemente SW1-SW4 auf, bei denen es sich beispielsweise um Vermittlungsstellen, Router oder Diensterechner zur Erbringung von Diensten eines sogenannten Intelligenten Netzes (IN) handelt. Das Netzwerk-Management-System NMS weist beispielsweise eine offene Systemarchitektur auf und dient zur Verwaltung, Wartung und zum Betrieb der Netzelemente SW1 - SW4 sowie weiterer, in der Figur nicht dargestellter Netzwerkeinrichtungen des Kommunikationsnetzes NW. Bei dem Kommunikationsnetz NW kann es sich sowohl um ein Telekommunikationsnetz, beispielsweise um ein Telefonoder Datennetzwerk, handeln oder aber um ein lokales Netzwerk, beispielsweise ein LAN (Local Area Network). An die Netzelemente SW1 - SW4 können beispielsweise nicht dargestellte Endgeräte, zum Beispiel Telefon-Endgeräte, Personal Computer oder dergleichen, angeschlossen sein.

Die Netzelemente SW1 - SW4 sind Quellen für Ereignisinformationen, beispielsweise Überschreitung von Grenzwerten, Störungen, Lastinformationen oder dergleichen, die sie an das Netzwerk-Management-System NMS senden. Dort werden die Ereignisinformationen durch Ereignis-Verarbeitungsagenten VO1, VO2 vorverarbeitet. Bei diesen handelt es sich um einen Prozess oder eine Gruppe von Prozessen, deren Programmcode durch den Server SV2 ausgeführt wird. Ferner dienen die Verarbeitungsagenten VO1, VO2 im vorliegenden Fall auch zur Steuerung der Netzelemente SW1 - SW4. Man kann die Verarbeitungsagenten VO1, VO2 auch als verwaltete Objekte (engl. managed objects) bezeichnen, die die Netzelemente SW1, SW4 bzw. SW2, SW3 innerhalb des Netzwerk-Management-Systems NMS repräsentieren. Jedenfalls können die Verarbeitungsagenten VO1, VO2 jeweils nur einen Teilaspekt der Netzelemente SW1 - SW4 repräsentieren, beispielsweise lediglich für von diesen gesendete Alarmmeldungen zuständig sein, oder diese innerhalb des Netzwerk-Management-Systems NMS vollständig repräsentieren.

Der Verarbeitungsagent VO1 ist für die Netzelemente SW1, SW4 zuständig, der Verarbeitungsagent VO2 für die Netzelemente SW2, SW3. Es ist auch denkbar, dass für jedes der Netzelemente SW1 - SW4 jeweils ein Verarbeitungsagent zuständig ist. Ferner könnten mehrere Verarbeitungsagenten einer Ressource zugeordnet sein und diese unterschiedlich repräsentieren. Beispielsweise könnte der Verarbeitungsagent VO1 Alarme des Netzelementes SW1 und der Verarbeitungsagent VO2 dessen Messwerte repräsentieren. Zudem könnten die Verarbeitungsagenten auch unmittelbar durch die Netzelemente SW1, SW2, SW3, SW4 gebildet werden oder von diesen ausgeführte Prozesse sein.

Zur Verwaltung, zum Betreiben und Warten der Verarbeitungsagenten VO1, VO2 sind Management-Objekte oder Management-Agenten MO1, MO2 vorgesehen, die als vom Server SV1 ausgeführte Prozesse oder Prozess-Gruppen ausgebildet sind. Beispielsweise kann das Management-Objekt MO1 zur Fehlerbehebung bei Störungen der Netzelemente SW1 - SW4 vorgesehen sein und das Management-Objekt MO2 zur Anzeige von deren Betriebszuständen an einer ebenfalls vom Server SV1 ausgeführten Bedienoberfläche Ul.

Bei den nicht näher dargestellten Servern SV1 - SV3 handelt es sich um Rechner oder Rechnernetzwerke, die durch ein Betriebssystem, beispielsweise Unix oder Windows NT, betrieben werden. Die Server SV1 - SV3 weisen Sende- und Empfangsmittel auf, beispielsweise Ethernet-Schnittstellenkarten, Modems oder dergleichen, die zum Senden und Empfangen von Daten geeignet sind. Weiter sind Speichermittel, beispielsweise Festplatten und RAM-Bausteine, sowie Steuermittel vorgesehen, beispielsweise jeweils einzelne Prozessoren oder Cluster von Prozessoren. Die Steuermittel führen unter Kontrolle eines Betriebssystems Programmcode-Sequenzen von Programmmodulen aus, die in den Speichermitteln abgelegt sind. Beispielsweise führen sie Programmcode der Bedienoberfläche Ul, der Management-Objekte MO1, MO2 sowie auch der Verarbeitungsagenten VO1, VO2 aus.

Die Netzelemente SW1, SW4 senden über Verbindungen VS1 bzw. VS4 Ereignisinformationen an den Verarbeitungsagenten VO1, die Netzelemente SW2, SW3 über Verbindungen VS2, VS3 Ereignisinformationen an den Verarbeitungsagenten VO2. Die Ereignisinformationen sind beispielsweise Nachrichten, die Grenzwertverletzungen, eine aktuelle Systemlast oder Verkehrswerte von durch die Netzelemente SW1-SW4 genutzten oder betriebenen Verbindungen betreffen. Die Ereignisinformationen werden beispielsweise als strukturierte Daten zum Beispiel mit Hilfe der Basic Encoding Rules (BER) gemäß den Definitionen der International Telecommunication Union versandt. Sie können aber auch sogenannte Object-Request-Broker-Objekte (ORB) sein, die zum Beispiel gemäß der CORBA-Spezifikation (CORBA = Common Object-Request-Broker-Architecture) der OMG (Object Management Group) oder der DCOM-Spezifikation der Firma Microsoft sein.

Beim Systemstart des Netzwerk-Management-Systems startet dieses zunächst die Verarbeitungsagenten VO1, beispielsweise anhand von Konfigurationsdaten sowie anhand von deren Programmcode, die jeweils in nicht dargestellten Speichermitteln des Servers SV2 abgelegt sind. Auch die weiteren Prozesse, Objekte oder dergleichen, beispielsweise die Management-Objekte MO1, MO2, werden auf diese Weise gestartet. Weiterhin werden ein Anforderungs-Manager (Request-Manager) RM, der zur Bearbeitung von durch die Manager-Objekte MO1, MO2 gesendeten Anforderungen vorgesehen ist, sowie ein Versendefilter EFD, beispielsweise ein so genannter Event Forwarding Discriminator, der dem Verarbeitungsagenten VO1 zugeordnet ist, gestartet. Für den Startvorgang kann in den Servern SV1 - SV3 ein Startprozess oder Startagent vorgesehen sein.

Anhand von Konfigurationsdaten, beispielsweise anhand von Startparametern und/oder einer Konfigurationsdatei, ermitteln die Verarbeitungsagenten VO1, VO2, für welche Netzelemente sie zuständig sind. Beispielsweise können in den Konfigurationsdaten der Name des jeweiligen Netzelements, dessen Software-Version, die Art von Ereignisinformationen, die von dem jeweiligen Netzelement gesendet werden, das Format der jeweiligen Ereignisinformationen, beispielsweise die Struktur der sie jeweils transportierenden Nachrichten, sowie weitere, hier nicht dargestellte Konfigurationsinformationen enthalten sein.

Es ist aber auch möglich, dass die Verarbeitungsagenten VO1, VO2 dynamisch die jeweilige Konfiguration der Netzelemente ermitteln, d.h. beispielsweise, dass die Verarbeitungsagenten VO1, VO2 z.B. beim Systemstart ermitteln, für welche Netzelemente sie zuständig sind.

Im Ausführungsbeispiel ist der Verarbeitungsagent VO1 zunächst für das Netzelement SW1 zuständig (das Netzelement SW4 ist noch außer Betrieb) und startet zur Verarbeitung von durch diesen gesendeten Ereignisinformationen einen Unteragenten S1. Dafür ist beim Verarbeitungsagenten VO1 als Startmittel eine Startfunktion INI vorgesehen, die beispielsweise anhand der vorhin erwähnten Konfigurationsdaten ermittelt, welcher Typ von Unteragent zur Verarbeitung der Ereignisinformationen des Netzelements SW1 geeignet ist, und dementsprechend ein geeignetes Programmmodul als Unteragenten S1 ins Leben ruft. Die Startfunktion INI kann zudem dem Unteragenten S1 Startparameter oder sonstige Konfigurationsparameter, die dieser zur Verarbeitung von Ereignisinformationen benötigt, übermitteln.

Analog startet der Verarbeitungsagent VO2 Unteragenten S21, S22, die zur Verarbeitung von durch das Netzelement SW2 gesendeten Ereignisinformationen vorgesehen sind, sowie einen Unteragenten S31, der zur Verarbeitung von durch das Netzelement SW3 gesendeten Ereignisinformationen vorgesehen ist. Das Netzelement SW2 sendet vorliegend unterschiedliche Typen von Ereignisinformationen, beispielsweise Grenzwertmeldungen und Alarmmeldungen, an den Verarbeitungsagenten VO2. Jeweils einer der Unteragenten S21, S22 ist für jeweils einen oder mehrere Typen der unterschiedlichen Ereignisinformationen zuständig und kann diese optimal verarbeiten.

Es ist auch denkbar, dass die Unteragenten S21, S22 unterschiedliche Funktionen ausführen, beispielsweise dass der Unteragent S21 Ereignisinformationen in eine Protokolldatei einträgt, während der Unteragent S22 bei diesen gegebenenfalls eine Fehlerbehandlung einleitet. Bei einer solchen Konstellation kann der Verarbeitungsagent VO2 dieselbe Ereignisinformation sowohl an den Unteragenten S21 als auch an den Unteragenten S22 weiterleiten.

Der Unteragent S31 ist zur Verarbeitung von Ereignisinformationen des Netzelementes SW3 vorgesehen, das dieses auf Grund einer aktuell geladenen Betriebs-Software K31 sendet.

In einer besonders bevorzugten Ausführungsform der Erfindung führen einer oder mehrere Unteragenten jeweils eine Ereignis-Datenbank, in die sie ihnen gemeldete Ereignisinformationen eintragen, so dass sie beispielsweise von den Management-Objekten MO1, MO2 abfragbar sind. Beispielhaft ist bei dem Unteragenten S1 als eine solche Ereignis-Datenbank ein Ereignisspiegel MIRS gezeigt, der sozusagen den Ereigniszustand des Netzelementes SW1 zumindest teilweise widerspiegelt.

Die Unteragenten S1, S21, S22, S31 kommunizieren über Verbindungen V1, V21, V22 bzw. V31 mit den ihnen jeweils zugeordneten Verarbeitungsagenten VO1 und VO2. Bei den Verbindungen V1 - V31 handelt es sich beispielsweise um Interprozess-Kommunikationsverbindungen. Vorliegend ist jeder der Unteragenten S1-S31 ein selbstständiger Prozess, dem von dem nicht dargestellten Betriebssystem des Servers SV2 individuell Ressourcen, beispielsweise Prozessorzeit und Speicher, zugeteilt werden.

Im Folgenden werden einige beispielhafte Verarbeitungsabläufe von Ereignisinformationen durch das erfindungsgemäß arbeitende Netzwerk-Management-System NMS erläutert:

Das Netzelement SW1 sendet eine Nachricht M1 mit einer Zieladresse DA1 und einer Quelladresse SA1 sowie einer Ereignisinformation E1, beispielsweise einer Grenzwertverletzung, an den Verarbeitungsagenten VO1. Dieser empfängt die Nachricht M1 mittels einer Verbindungsfunktion, beispielsweise einer Programmfunktion, TRV, die als Sende- und Empfangsmittel zum Empfangen von Ereignisinformationen dient. Eine Verteilfunktion DIS, die in die Verbindungsfunktion TRV integriert sein kann, ermittelt anhand eines Kennzeichners in der Nachricht M1, vorliegend anhand der Quelladresse SA1, dass zur Verarbeitung der Nachricht M1 der Unteragent S1 zuständig ist. Bei dem Verarbeitungsagenten VO1 kann hierfür beispielsweise eine Zuordnungstabelle vorgesehen sein. Jedenfalls leitet der Verarbeitungsagent VO1 die Nachricht M1 an den Unteragenten S1 weiter, der die darin enthaltene Ereignisinformation E1 in seinen Ereignisspiegel MIRS einträgt. Auf dieselbe Weise kann der Verarbeitungsagent VO1 auch weitere, nicht dargestellte Nachrichten mit Ereignisinformationen des Netzelementes SW1 empfangen und zur eigentlichen Ereignisverarbeitung, vorliegend zum Eintragen in den Ereignisspiegel MIRS, an den Unteragenten S1 weiterleiten.

Die Funktionen des Verarbeitungsagenten VO1, also die Verteilfunktion DIS, die Verbindungsfunktion TRV, die Startfunktion INI und die Überwachungsfunktion CM können jeweils einzeln oder in beliebigen Gruppierungen als separate Prozesse realisiert sein.

Sinngemäß gleichartig arbeitet der Verarbeitungsagent VO2, der von dem Netzelement SW2 gesendete Nachrichten M21, M22 an die Unteragenten S21, S22 weiterleitet. In beiden Nachrichten M21, M22 sind jeweils identische Quelladressen SA2 und identische Zieladressen DA2 eingetragen. Unterschiedlich sind jedoch die in den Nachrichten M21, M22 enthaltenen Ereignisinformationen E21, E22, bei denen es sich beispielsweise um eine Alarmmeldung bzw. einen zyklisch gemeldeten Messwert handelt. Die Verteilfunktion DIS des Verarbeitungsagenten VO2 ermittelt hierbei anhand der Quelladresse SA2, dass die Unteragenten S21, S22 für die Meldungen M21, M22 zuständig sind. Ferner ermittelt Sie anhand der Ereignisinformationen E21, E22, dass die Nachricht M21 an den Unteragenten S21 und die Nachricht M22 an den Unteragenten S22 weiterzuleiten ist.

Bei einer von dem Netzelement SW3 gesendeten Nachricht M31 genügt es, dass die Verteilfunktion DIS die darin enthaltene Quelladresse SA3 ausliest und anhand dieser ermittelt, dass der Unteragent S31 für die Verarbeitung der Nachricht M31 zuständig ist und beispielsweise eine darin enthaltene Ereignisinformation E311 in eine Protokolldatei einträgt.

Die erwähnten Ereignisinformationen E1 - E311 können von den Management-Objekten MO1, MO2 abgefragt werden. Diese senden entsprechende Anfragen über Verbindungen VR1 bzw. VR2 an den Anforderungs-Manager RM, der die jeweiligen Anforderungen über VerbindungenVD1 oder VD2 an die Verarbeitungsagenten VO1 bzw. VO2 weiterleitet, je nachdem, welcher der Verarbeitungsagenten VO1, VO2 für die jeweilige Anforderung geeignet ist. Beispielsweise sendet der Anforderungs-Manager RM eine Anforderung bezüglich Ereignisinformationen des Netzelementes SW2 an den Verarbeitungsagenten VO2. Dieser entscheidet dann, ob der Unteragent S21 und/oder der Unteragent S22 zur Bearbeitung der Anforderung geeignet ist. Der jeweilige Unteragent S21, S22 sendet dann die jeweilige Ereignisinformation, beispielsweise die Ereignisinformation E21, E22, über seine Verbindungsfunktion TRS an den Verarbeitungsagenten VO2 zur Weiterleitung an die Management-Objekte MO1 oder MO2. Diese generieren aus der Antwort dann beispielsweise eine Bildschirmanzeige, die über Verbindungen VM1 bzw. VM2 an die Bedienoberfläche UI weitergegeben wird.

Bei dem Verarbeitungsagenten VO1 ist zudem noch ein Versendefilter-Agent EFD vorgesehen, der Antwortnachrichten, die vom Verarbeitungsagenten VO1 bzw. dem Unteragenten S1 generiert werden, filtert, das heißt dahingehend überprüft, ob die in der jeweiligen Antwortnachricht enthaltene Information für das übergeordnete Management-Objekt MO1, MO2 überhaupt relevant ist. Irrelevante Informationen werden von dem Versendefilter-Agenten EFD ausgefiltert.

Die Verbindungen VR1, VR2 führen beispielsweise über ein die Server SV1, SV2 verbindendes LAN (Local Area Network), auf denen beispielsweise das CMIP-Protokoll (Common Management-Information-Protocol) der OSI (Open Systems Interconnection) oder das TCP/IP-basierte Simple Network-Management-Protocol (= SNMP; TCP/IP = Transmission Control Protocol / Internet Protocol) eingesetzt, die jeweils zum Transport von Managementinformationen geeignet sind.

Für den Anforderungs-Manager RM bleibt es verborgen, dass zur Bearbeitung der von den Management-Objekten MO1, MO2 gesendeten Anforderungen nicht die Verarbeitungsagenten VO1, VO2 alleine zuständig sind, sondern dass zudem die Unteragenten S1, S21, S22, S31 tätig werden. Ähnliches gilt für die durch das Netzwerk-Management-System NMS verwalteten Netzelemente SW 1- SW4. Diese senden ihre Ereignisinformationen an die Verarbeitungsagenten VO1, VO2, wobei es für sie irrelevant ist, dass zur eigentlichen Verarbeitung der Ereignisinformationen die Unteragenten S1, S21, S22, S31 zuständig sind.

Durch das erfindungsgemäße Delegieren der Verarbeitung von Ereignisinformationen an Unteragenten ergeben sich nicht nur, wie dargestellt, Vorteile hinsichtlich einer optimalen Anpassung der Unteragenten an die zu bearbeitenden Ereignisinformationen sowie hinsichtlich einer optimalen Zuordnung von Netzelementen und für diese jeweils zuständigen Unteragenten, sondern auch eine optimale Anpassbarkeit an Lastbedingungen sowie an veränderte Gegebenheiten hinsichtlich der Konfiguration des Kommunikationsnetzes NW. Dies wird im Folgenden dargestellt:

Beim Kommunikationsnetz NW wird nun das Netzelement SW4 in Betrieb genommen. Dieses wird dem Verarbeitungsagenten VO1 zugeordnet, das heißt, der Verarbeitungsagent VO1 soll nunmehr die von dem Netzelement SW4 gesendeten Ereignisinformationen verarbeiten und gegebenenfalls an die Management-Objekte MO1, M02 melden. Ein nicht dargestellter Steuerungsprozess, beispielsweise der anfänglich erwähnte Initialisierungsprozess, übermittelt dem Verarbeitungsagenten VO1 Daten bezüglich des Netzelementes SW4, beispielsweise dessen Adresse, die Formate von von diesem gesendeten Ereignisinformationen und/oder sonstige, das Netzelement SW4 charakterisierende Daten. Nun wäre es zwar prinzipiell denkbar, dass der Verarbeitungsagent VO1 den Unteragenten S1 mit der Bearbeitung der von dem Netzelement SW4 gesendeten Ereignisinformationen beauftragt. Im vorliegenden Fall jedoch ist der Unteragent S1 mit der Bearbeitung von Ereignisinformationen des Netzelementes SW1 bereits ausgelastet. Daher startet der Verarbeitungsagent VO1 einen speziell für das Netzelement SW4 zuständigen Unteragenten SW4. Dieser könnte zwar prinzipiell als ein von dem Server SV2 ausgeführtes Programmmodul ausgestaltet sein. Im vorliegenden Ausführungsbeispiel jedoch wird der Unteragent S4 vom Server SV3 ausgeführt, bei dem ausreichende Ressourcen hierfür vorhanden sind. Zwischen dem Verarbeitungsagenten VO1 und dem Unteragenten S4 wird eine Verbindung VR3 aufgebaut, bei der es sich um eine Interprozess-Schnittstelle, die z.B. über einen sogenannten Remote Procedure Call (RPC) nutzbar ist, oder eine sonstige Schnittstelle, auf der beispielsweise mit dem TCP/IP-Protokoll kommuniziert wird, handeln kann.

Es ist auch möglich, dass der Verarbeitungsagent VO1 deshalb den Unteragenten S4 startet, weil der Unteragent S1 das Format und/oder den Aufbau der von dem Netzelement SW4 gesendeten Ereignisinformationen nicht unterstützt. Das Netzelement SW4 sendet im Ausführungsbeispiel nämlich beispielsweise eine Nachricht M4, mit einer Zieladresse DA1 und einer Quelladresse SA4 sowie im Unterschied zur vom Netzelement SW1 gesendeten Nachricht M1 nicht nur einer Ereignisinformation E1, sondern jeweils zwei Ereignisinformationen pro Nachricht, im Beispiel Ereignisinformationen E41, E42.

Es ist femer auch möglich, dass das Netzelement SW4 an die Stelle des Netzelementes SW1 tritt, beispielsweise dessen Funktionen übernimmt. Der Verarbeitungsagent VO1 startet in diesem Fall zunächst den Unteragenten S4 zur Bearbeitung der Ereignisinformationen des Netzelementes SW4 und beendet den Unteragenten S1, wenn das Netzelement SW1 außer Betrieb genommen wird. Es ist demnach nicht zwingend notwendig, dass ein Verarbeitungsagent stets zwei oder mehr Unteragenten betreibt. Vielmehr kann ein Verarbeitungsagent auch jeweils nur einen Unteragenten betreiben und diesen erforderlichenfalls durch einen geeigneteren Unteragenten ersetzen, was am Beispiel der Unteragenten S31, S32 verdeutlicht werden soll:

Zunächst betreibt der Verarbeitungsagent den Unteragenten S31, der optimal an die Betriebs-Software K31 des Netzelementes SW3 angepasst ist. Nun wird bei dem Netzelement SW3 eine neue Betriebs-Software K32 in Betrieb genommen. Infolgedessen sendet das Netzelement SW3 nicht mehr Nachrichten des Typs der Nachricht M31, sondern Nachrichten des Typs der Nachricht M32. In Bezug auf die Quell- und Zieladressen SA3, DA2 sind die Nachrichten M31 und M32 identisch. Im Unterschied zur Nachricht M31 enthält die Nachricht M32 eine im Vergleich zur Ereignisinformation E311 in der Datenstruktur und/oder im Informationsgehalt modifizierte Ereignisinformation E312, die beispielsweise zusätzlich einen mittels der Betriebs-Software K32 ermittelbaren Messwert enthält. Im Ausführungsbeispiel kann zwar der Unteragent S32, nicht jedoch der Unteragent S31, die Ereignisinformation E312 verarbeiten.

Das Neuladen der Betriebs-Software K32 wird dem Verarbeitungsagenten VO2 beispielsweise von dem nicht dargestellten zentralen Initialisierungs- und/oder Steuerungsprozess des Netzwerk-Management-Systems NMS mitgeteilt. Daraufhin startet dieser den Unteragenten S32, mit dem er über die Verbindung V32 kommuniziert und der zur Verarbeitung von Nachrichten des Typs der Nachricht M32 geeignet ist. Die Unteragenten S31, S32 können dann z.B. parallel betrieben werden, wobei der Unteragent S31 Nachrichten des Typs der Nachricht M31, der Unteragent S32 Nachrichten des Typs der Nachricht M32 verarbeiten kann. Ferner ist es möglich, dass der Unteragent S32 an die Stelle des Unteragenten S31 tritt, der Unteragent S31 mithin terminiert wird. Dabei ist es vorzugsweise vorgesehen, dass der Verarbeitungsagent VO2 vor dem Terminieren des Unteragenten S31 einen Datenabgleich zwischen den Unteragenten S31, S32 vornimmt und/oder den Unteragenten S32 mit Startdaten initialisiert. Ferner ist es möglich, dass der Unteragent S32 und/oder der Verarbeitungsagent VO2 beispielsweise eine Datenabfrage bei dem Netzelement SW3 auslösen, um so dessen aktuellen Ereigniszustand zu erfahren.

Die Unteragenten S1, S4; S21, S22, S31, S32 arbeiten sozusagen unter der Kontrolle der Verarbeitungsagenten VO1, VO2. Diese Kontrolle kann sich prinzipiell darauf beschränken, dass die Verarbeitungsagenten VO1, VO2 die Unteragenten S1, S4; S21, S22, S31, S32 starten sowie erforderlichenfalls terminieren. Die Verarbeitungsagenten VO1, VO2 können einen Befehl zur Beendigung eines Unteragenten S1, S4; S21, S22, S31, S32 an das Betriebssystem des Servers SV2 und/oder an den jeweils zu beendenden Unteragenten S1, S4; S21, S22, S31, S32 als Steuerbefehl übermitteln. Auch eine Anforderung, die ein Verarbeitungsagent VO1, VO2 an einen Unteragenten S1, S4; S21, S22, S31, S32 sendet, beispielsweise eine Anforderung an den Unteragenten S1 zum Senden des Inhalts des Ereignisspiegels MIRS, kann ein solcher Steuerbefehl sein.

Ein weiterer Steuerbefehl kann eine Überprüfungsanfrage sein, die eine Überwachungsfunktion CM des Verarbeitungsagenten VO1 an den Unteragenten S1 sendet und der von dessen Meldefunktion MC beantwortet wird. Mit einer derartigen Überprüfungsanfrage kann die korrekte Funktion des Unteragenten S1 überwacht werden. Die Überprüfungsanfrage wird beispielsweise zyklisch gesendet und muss von dem Unteragenten S1 korrekt beantwortet werden. Wenn dies nicht der Fall ist, also eine Funktionsstörung beim jeweiligen Unteragenten S1 auftritt, kann der Verarbeitungsagent VO1 einen neuen Unteragenten starten, der an die Stelle des gestörten Unteragenten S1 tritt und/oder eine Fehlermeldung protokollieren und/oder eine Fehlermeldung an die Management-Objekte MO1, MO2 senden.

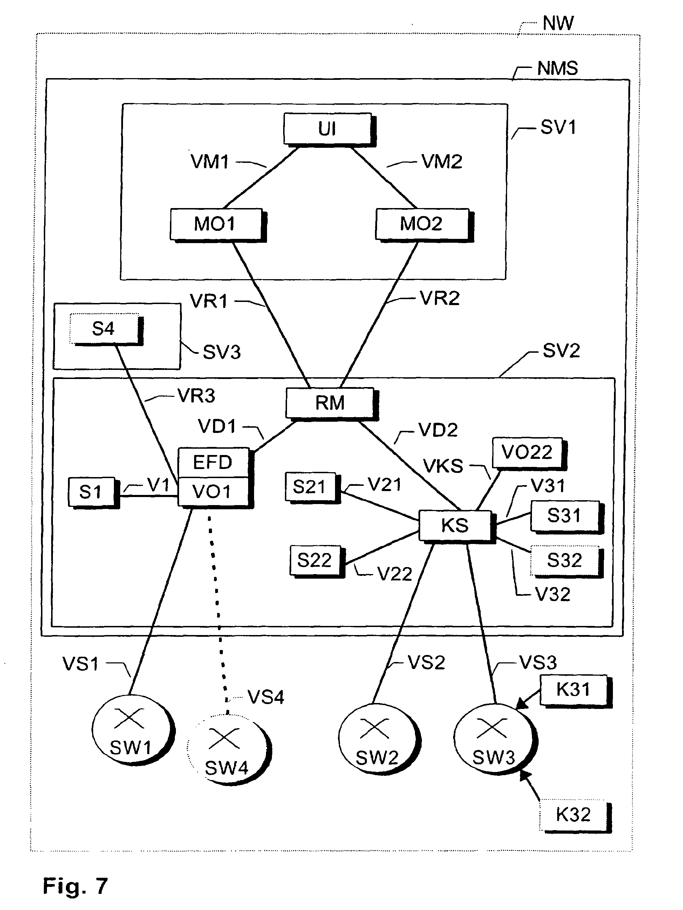

Bei der in Figur 7 dargestellten Abwandlung der Anordnung aus Figur 1 ist ein zusätzlicher, mit einem Verarbeitungsagenten VO22 über ein Verbindung VKS kooperierenden Kommunikationsagenten KS. Der Verarbeitungsagent VO2 entspricht im Wesentlichen dem Verarbeitungsagenten VO2, d.h. er startet und beendet die Unteragenten S21, S22, S31, S32 in der oben beschriebenen Weise. Im Unterschied zum Verarbeitungsagenten VO2 wird die Kommunikation zwischen den Unteragenten S21, S22, S31, S32 einerseits und den Netzelementen SW2, SW3 sowie dem Anforderungs-Manager RM andererseits nicht durch den Verarbeitungsagenten VO22, sondern durch den Kommunikationsagenten KS gesteuert. Die Netzelemente SW2, SW3 senden die Ereignisinformationen M21, M22; M31, M32 daher nicht an den Verarbeitungsagenten VO22, sondern an den Kommunikationsagenten KS, welcher die Ereignisinformationen M21, M22; M31, M32 dann an den jeweils zuständigen Unteragenten S21, S22; S31, S32 weiterleitet. Der Verarbeitungsagenten VO22 teilt dem Kommunikationsagenten KS die jeweilige Konfiguration und/oder Adresse der Unteragenten S21, S22; S31, S32 mit, beispielsweise informiert er ihn, dass der Unteragent S31 anstelle des Unteragenten S32 für vom Netzelement SW3 gesendete Ereignisinformationen zuständig ist.

Der Kommunikationsagent KS kann ein durch den Server SV2 ausgeführter separater Prozess sein oder aber ein Teilprozess des Verarbeitungsagenten VO22, diesem mithin logisch zugeordnet sein.

Weitere Varianten der Erfindung sind ohne Weiteres möglich:

Die Management-Objekte MO1, MO2 könnten nach dem erfindungsgemäßen Konzept aufgebaut sein und jeweils einen oder mehrere Unteragenten betreiben, die jeweils optimal an die zu verarbeitenden Ereignisinformationen, auch bei Veränderung des zu verwaltenden Kommunikationsnetzes NW, angepasst sind.

Anstelle des Neustarts des Unteragenten S32 könnte der Verarbeitungsagent VO2 dem Unteragenten S31 Steuerdaten senden, mit denen dieser an die neue Betriebs-Software K32 angepasst wird, beispielsweise Steuerdaten, in denen die Datenstruktur der Nachricht M32 angegeben ist.

Der Unteragent S32, jedenfalls dessen Programmcode, könnte auch zur Laufzeit des Netzwerk-Management-Systems NMS in den Server SV2 geladen werden. Dies macht jedenfalls deutlich, dass die Software-Pflege des Netzwerk-Management-Systems und/oder eines von diesem verwalteten Kommunikationsnetzes auf Grund der Erfindung deutlich vereinfacht wird.

Es versteht sich, dass auch beliebige Kombinationen der in den Ansprüchen sowie in der Beschreibung angegebenen Maßnahmen und Anordnungen möglich sind.

## Patentansprüche

1. Verfahren zur Verarbeitung von Ereignisinformationen (E1-E42), die von Netzelementen (SW1-SW4) eines Kommunikationsnetzes (NW) an ein dieses verwaltendes Netzwerk-Management-System (NMS) gemeldet werden, durch einen Ereignis-Verarbeitungsagenten (V01, V02) des Netzwerk-Management-Systems (NMS), wobei der Verarbeitungsagent (V01, VO2) anhand von Konfigurationsdaten einen oder mehrere Unteragenten (S1, S4; S21, S22, S31, S32) zur Verarbeitung von Ereignisinformationen (E1-E42) startet,
**dadurch gekennzeichnet dass**
- der Verarbeitungsagent (V01, V02) anhand von zu verarbeitenden Ereignisinformationen (E1-E42) neue Unteragenten (S1, S4; S21, 522, S31, S32) zur Verarbeitung von Ereignisinformationen (E1-E42) startet oder beendet, und
- der Verarbeitungsagent (VO1, V02) oder ein Kommunikationsagent (KS) Nachrichten (M1 bis M4) von Ereignisinformationen (E1-E42) empfängt und anhand eines Kennzeichners in den Nachrichten, den zur Verarbeitung der Nachrichten zuständigen Unteragenten ermittelt, und diese Nachrichten an diesen Unteragenten (S1, S4; S21, S22, S31, S32) weiterleitet.

2. Verfahren nach Anspruch 1, **dadurch gekennzeichnet, dass** der Verarbeitungsagent (V01, V02) anhand von Ereignisinformationen (E1-E42) oder einer Quelladresse (SA1-SA4) in den Nachrichten (M1 bis M4), den zur Verarbeitung der Nachrichten zuständigen Unteragenten ermittelt.

3. Verfahren nach Anspruch 1, **dadurch gekennzeichnet, dass** der Verarbeitungsagent eine Veränderung der Konfiguration des durch das Netzwerk-Management-System (NMS) verwalteten Kommunikationsnetzes (NW) und/oder der Konfiguration von Netzelementen (SW1-SW4) des Kommunikationsnetzes (NW) als das zumindest eine Kriterium ermittelt.

4. Verfahren nach Anspruch 1, **dadurch gekennzeichnet, dass** der Verarbeitungsagent (V01, V02) bei einer Veränderung des mindestens einen Kriteriums nach dem Starten des ersten und mindestens einen zweiten Unteragenten (S1, S4; S21, S22, S31, S32) von dem Kriterium abhängige Steuerdaten an den ersten und/oder den mindestens einen zweiten Unteragenten (S1, S4; S21, S22, S31, S32) sendet und/oder den ersten und/oder den mindestens einen zweiten Unteragenten (S1, S4; S21, S22, S31, S32) terminiert und/oder mindestens einen dritten Unteragenten (S1, S4; S21, S22, S31, S32) startet.

5. Verfahren nach Anspruch 1, **dadurch gekennzeichnet, dass** der Verarbeitungsagent (VO1, VO2) die Funktionsfähigkeit der ersten und/oder des mindestens einen zweiten Unteragenten (S1, S4; S21, S22, S31, S32) überwacht und bei einer Funktionsstörung eine Fehlerbehandlung initialisiert.

6. Verfahren nach Anspruch 1, **dadurch gekennzeichnet, dass** die ersten und/oder die zweiten Ereignisinformationen (E1-E42) von Netzelementen (SW1-SW4) gesendete Alarmmeldungen enthalten.

7. Ereignis-Verarbeitungsagent (V01, V02) eines Netzwerk-Management-Systems (NMS) zur Verarbeitung von Ereignisinformationen (E1-E42), die von Netzelementen (SW1-SW4) eines Kommunikationsnetzes (NW) an ein dieses verwaltendes Netzwerk-Management-System (NMS) gemeldet werden, der Startmittel (INI) aufweist, die derart ausgestaltet sind, dass er anhand von Konfigurationsdaten einen oder mehrere Unteragenten (S1, S4; S21, S22, S31, S32) zur Verarbeitung von Ereignisinformationen (E1-E42) starten kann,
**dadurch gekennzeichnet dass**
- die Startmittel (INI) weiter ausgestaltet sind, dass der Verarbeitungsagent (VO1, V02) anhand von zu verarbeitenden Ereignisinformationen (E1-E42) neue Unteragenten (S1, S4; S21, S22, S31, S32) zur Verarbeitung von Ereignisinformationen (E1-E42) startet oder beendet,
- der Verarbeitungsagent (VO1, V02) Sende- und Empfangsmittel (TRV) aufweist, die derart ausgestaltet sind, dass er Nachrichten (M1 bis M4) von Ereignisinformationen empfängt und an den Unteragenten (S1, S4; S21, S22, S31, S32) weiterleitet, und
- der Verarbeitungsagent (VO1, VO2) eine Verteilfunktion (DIS) aufweist, die derart ausgestaltet ist, dass er anhand eines Kennzeichners in den Nachrichten (M1 bis M4), den zur Verarbeitung der Nachrichten zuständigen Unteragenten ermittelt.

8. Ereignis-Verarbeitungsagent (VO1, V02) nach Anspruch 7, **dadurch gekennzeichnet, dass** er Programmcode enthält, der von einem Steuermittel eines Servers (SV2, SV3) des Netzwerk-Management-Systems (NMS) ausgeführt werden kann.

9. Speichermittel, insbesondere Diskette oder CD-ROM, Digital Versatile Disc, Festplattenlaufwerk oder dergleichen, mit einem darauf gespeicherten Ereignis-Verarbeitungsagenten (VO1, VO2) nach Anspruch 8.

10. Server (SV2) eines Netzwerk-Management-Systems (NMS) mit einem Steuermittel zur Ausführung des Ereignis-Verarbeitungsagenten (V01, V02) nach Anspruch 8.

## Claims

1. Method for processing event messages (E1-E42), signalled by network elements (SW1-SW4) of a communication network (NW) to a network management system (NMS) administering the latter, via an event processing agent (VO1, V02) of the network management system (NMS), where, by means of configuration data, the processing agent (VO1, V02) starts one or more sub-agents (S1, S4; S21, S22, S31, S32) for the processing of event messages (E1-E42),
**characterised in that**
- the processing agent (VO1, V02), by means of event messages to be processed (E1-E42), starts or terminates new sub-agents (S1, S4; S21, S22, S31, S32) for processing event messages (E1-E42), and
- the processing agent (VO1, V02) or a communication agent (KS) receives messages (M1 to M4) of event information (EI-E42) and, by means of a flag in the messages, determines the sub-agent assigned to process the messages, and forwards the messages to the said sub-agent (S1, S4; S21, S22, S31, S32).

2. Method according to Claim 1, **characterised in that**, by means of event information (E1-E42) or a source address (SA1-SA4) in the messages (M1 to M4), the processing agent (VO1, V02) determines the sub-agent assigned to process the messages.

3. Method according to Claim 1, **characterised in that** the processing agent detects a change in the configuration of the communication network (NW) administered by the Network Management System (NMS) and/or in the configuration of network elements (SW1-SW4) of the communication network (NW) as the at least one criterion.

4. Method according to Claim 1, **characterised in that**, in the event of a change in the at least one criterion after having started the first and at least a second sub-agent (S1, S4; S21, S22, S31, S32), the processing agent (VO1, V02) sends control data dependent on the criterion to the first and/or the at least one second sub-agent (S1, S4; S21, S22, S31, S32) and terminates the first and/or the at least one second sub-agent (S1, S4; S21, S22, S31, S32) and/or starts at least a third sub-agent (S1, S4; S21, S22, S31, S32).

5. Method according to Claim 1, **characterised in that** the processing agent (VO1, VO2) monitors the functionality of the first and/or the at least one second sub-agent (S1, S4; S21, S22, S31, S32) and, in the event of a malfunction, initialises an error processing procedure.

6. Method according to Claim 1, **characterised in that** the first and/or the second event messages (E1-E42) contain alarm messages sent by the network elements (SW1-SW4).

7. Event processing agent (VO1, VO2) of a network management system (NMS) for processing event messages (E1-E42), reported by network elements (SW1-SW4) of a communication network (NW) to a network management system (NMS) administering the latter, having starting means (INI), which are designed such that it can, by means of configuration data, start one or more sub-agents (S1, S4; S21, S22, S31, S32) for the processing of event messages (E1-E42),
**characterised in that**
- the starting means (INI) are further designed such that the processing agent (VO1, VO2) by means of event messages to be processed (E1-E42), starts or terminates new sub-agents (S1, S4; S21, S22, S31, S32) for processing event messages (E1-E42),
- the processing agent (VO1, VO2) has sending and receiving means (TRV), designed such that the communication agent receives messages (M1 to M4) from event information and forwards them to the sub-agent (S1, S4; S21, S22, S31, S32), and
- the processing agent (VO1, VO2) has a distribution function (DIS), designed such that, by means of a flag in the messages (M1 to M4), it determines the sub-agent assigned to process the messages.

8. Event processing agent (VO1, VO2) according to Claim 7, **characterised in that** it comprises programme code that can be executed by a control means of a server (SV2, SV3) of the Network Management System (NMS).

9. Storage means, in particular diskettes or CD-ROM, Digital Versatile Disc, hard drives or similar, with an event processing agent (VO1, VO2) stored thereon according to Claim 8.

10. Server (SV2) of a Network Management Systems (NMS) with control means for the execution of the event processing agent (VO1, V02) according to Claim 8.

## Revendications

1. Procédé de traitement d'informations d'événements (E1-E42) signalées par des éléments de réseau (SW1-SW4) d'un réseau de communication (NW) à un système de gestion de réseau (NMS) gérant ledit réseau de communication, par l'intermédiaire d'un agent de traitement d'événements (V01, V02) du système de gestion de réseau (NMS), selon lequel l'agent de traitement (V01, V02) lance un ou plusieurs sous-agent(s) (S1, S4 ; S21, S22, S31, S32) au moyen de données de configuration pour traiter les informations d'événements (E1-E42),
**caractérisé en ce que**
- l'agent de traitement (V01, V02) lance ou met fin aux nouveaux sous-agents (S1, S4 ; S21, S22, S31, S32) au moyen des informations d'événements (E1-E42) à traiter pour traiter les informations d'évènements (E1-E42), et
- l'agent de traitement (V01, V02) ou un agent de communication (KS) reçoit les messages (M1 à M4) contenant les informations d'événements (E1-E42) et détermine le sous-agent chargé de traiter les messages au moyen d'un identificateur contenu dans les messages, et transmet ces messages à ce sous-agent (S1, S4 ; S21, S22, S31, S32).

2. Procédé selon la revendication 1, **caractérisé en ce que** l'agent de traitement (V01, V02) détermine le sous-agent chargé de traiter les messages au moyen des informations d'événements (E1-E42) ou d'une adresse source (SA1-SA4) contenue dans les messages (M1 à M4).

3. Procédé selon la revendication 1, **caractérisé en ce que** l'agent de traitement détermine une modification de la configuration du réseau de communication (NW) géré par le système de gestion de réseau (NMS), et/ou de la configuration d'éléments de réseau (SW1-SW4) du réseau de communication (NW) comme au moins un critère.

4. Procédé selon la revendication 1, **caractérisé en ce que** l'agent de traitement (V01, V02) transmet les données de commande dépendant du critère au premier et/ou au moins au deuxième sous-agent (S1, S4 ; S21, S22, S31, S32) après le lancement du premier et d'au moins un deuxième sous-agent (S1, S4 ; S21, S22, S31, S32) et/ou met fin au premier et/ou au moins au deuxième sous-agent (S1, S4 ; S21, S22, S31, S32) et/ou lance au moins un troisième sous-agent (S1, S4 ; S21, S22, S31, S32) lors d'une modification d'au moins un critère.

5. Procédé selon la revendication 1, **caractérisé en ce que** l'agent de traitement (V01, V02) surveille la fonctionnalité du premier et/ou d'au moins un deuxième sous-agent (S1, S4 ; S21, S22, S31, S32) et initialise un traitement des erreurs lors d'un défaut de fonctionnement.

6. Procédé selon la revendication 1, **caractérisé en ce que** les première et/ou seconde informations d'événements (E1-E42) des éléments de réseau (SW1-SW4) contiennent les messages d'alerte envoyés.

7. Agent de traitement d'événements (V01, V02) d'un système de gestion de réseau (NMS) destiné à traiter les informations d'événements (E1-E42) signalées par des éléments de réseau (SW1-SW4) d'un réseau de communication (NW) à un système de gestion de réseau (NMS) gérant ledit système de gestion de réseau, présentant des moyens de lancement (INI) formés de telle sorte qu'il peut lancer un ou plusieurs sous-agents (S1, S4 ; S21, S22, S31, S32) au moyen des données de configuration pour traiter les informations d'évènements (E1-E42), **caractérisé en ce que**
- les moyens de lancement (INI) sont par ailleurs formés de telle sorte que l'agent de traitement (V01, V02) lance ou met fin aux nouveaux sous-agents (S1, S4 ; S21, S22, S31, S32) au moyen des informations d'événements (E1-E42) à traiter pour traiter les informations d'évènements (E1-E42),
- l'agent de traitement (V01, V02) présente des moyens de transmission et de réception (TRV) formés de telle sorte qu'il reçoit et transmet les messages (M1 à M4) contenant des informations d'événements aux sous-agents (S1, S4 ; S21, S22, S31, S32), et
- l'agent de traitement (V01, V02) présente une fonction de répartition (DIS) formée de telle sorte qu'il détermine le sous-agent chargé de traiter les messages au moyen d'un identificateur contenu dans les messages (M1 à M4).

8. Agent de traitement d'événements (V01, V02) selon la revendication 7, **caractérisé en ce qu'**il contient le code de programme pouvant être exécuté par un moyen de commande d'un serveur (SV2, SV3) du système de gestion de réseau (NMS).

9. Support de stockage, notamment disquette ou CD-Rom, disque numérique versatile, unité de disque dur ou analogues, comportant un agent de traitement d'événements (V01, V02) stocké sur celui-ci selon la revendication 8.

10. Serveur (SV2) d'un système de gestion de réseau (NMS) comportant un moyen de commande destiné à exécuter l'agent de traitement d'événements (V01, V02) selon la revendication 8.
